# EUROPÄISCHE PATENTANMELDUNG

(11) **EP 2 819 408 A2**
(43) Veröffentlichungstag der Anmeldung: **31.12.2014**
(21) Anmeldenummer: 14171874.2
(22) Anmeldetag: 11.06.2014
(51) Int. Cl.: H04N 13/00

(54) **Verfahren und Vorrichtung zum Anpassen einer Darstellung eines Bildes auf einem Bildschirm**

(30) Priorität: 27.06.2013 DE 102013212374
(71) Anmelder: ROBERT BOSCH GMBH, 70442 Stuttgart (DE)
(72) Erfinder: Buergstein, Thomas, 71686 Remseck (DE)

(57) **Zusammenfassung**

Die Erfindung betrifft ein Verfahren zum Anpassen einer Darstellung eines Bildes (102) auf einem Bildschirm (104). Das Verfahren umfasst ansprechend auf ein Anpassungssignal (108) einen Schritt des Ausgebens eines Änderungssignals (110) zum Ändern eines Informationsgehaltes in dem Bild (102) und/oder des Änderns eines virtuellen Abstands (212) zwischen einer ersten virtuellen Ebene (208) und einer zweiten virtuellen Ebene des Bildes (102) und/oder einer Oberfläche (206) des Bildschirms (104).

## Beschreibung

### Stand der Technik

Die vorliegende Erfindung bezieht sich auf ein Verfahren zum Anpassen einer Darstellung eines Bildes auf einem Bildschirm, auf eine entsprechende Vorrichtung sowie auf ein entsprechendes Computerprogrammprodukt.

Displaydarstellungen werden in sämtlichen Einsatzgebieten immer detailreicher und komplexer. Die Darstellung eines beliebig komplexen Bildes, wie z. B. einer vom Designer entworfenen 3D-Szene, ist inzwischen Stand der Technik, so wie auch die Darstellung eines 3D-Effektes mit einem Bildschirm, z. B. mit Hilfe einer parallaxen Barriere. Im Falle des automobilen Umfelds betrifft dies z. B. ein entworfenes HMI, zugeschnitten auf eine Betrachtersituation.

Infolge einer Darstellung komplexer Bilder wie beispielsweise 3D-Bilder auf Bildschirmen in Fahrzeugen kann es zu einer Ermüdung der Augen des Fahrers kommen, insbesondere bei einem längeren Betrachtungszeitraum. Dies ist besonders bei ungenügenden 3D-Effekten der Fall, die z. B. in autostereoskopischen Displays auftreten können. Um einem damit einhergehenden Sicherheitsrisiko zu begegnen, werden beispielsweise Müdigkeitssensoren eingesetzt. Diese können ausgeführt sein, um durch eine Auswertung von Verhaltensmustern oder durch Beobachtung des Betrachters bzw. Fahrers mittels Kamerasystemen, Müdigkeitssymptome zu erkennen und geeignete Maßnahmen anzustoßen.

Die EP 1 726 513 A1 offenbart ein Fahrerassistenzsystem für Fahrzeuge. Das Fahrerassistenzsystem umfasst einen Spurhalteassistenten und ist ausgebildet, um bei Gefahr einer Ablenkung des Fahrers in seiner Fahrtätigkeit ein Lenkmoment aufzubringen oder ein geeignetes Warnsignal auszugeben.

### Offenbarung der Erfindung

Vor diesem Hintergrund wird mit der vorliegenden Erfindung ein Verfahren zum Anpassen einer Darstellung eines Bildes auf einem Bildschirm, weiterhin eine Vorrichtung, die dieses Verfahren verwendet sowie schließlich ein entsprechendes Computerprogrammprodukt gemäß den Hauptansprüchen vorgestellt. Vorteilhafte Ausgestaltungen ergeben sich aus den jeweiligen Unteransprüchen und der nachfolgenden Beschreibung.

Mit einer individuell und/oder automatisch durchführbaren softwaretechnischen Anpassung einer Komplexität einer Darstellung eines auf einem Bildschirm angezeigten Inhalts kann auf eine Ermüdung eines Betrachters des Inhalts reagiert bzw. dieser entgegengewirkt werden. So kann ein Risiko, aufgrund der Anzeigendarstellung eine Beschleunigung der Ermüdung zu erhöhen, wirksam verringert werden.

Das hierin vorgestellte Konzept eignet sich beispielsweise für eine Umsetzung im Zusammenhang mit der Darstellung von 3D-Bildern auf Bildschirmen von Anzeigegeräten, da deren Betrachtung bei vielen Personen bereits nach relativ kurzer Zeit Ermüdungserscheinungen hervorruft.

Ein Verfahren zum Anpassen einer Darstellung eines Bildes auf einem Bildschirm weist ansprechend auf ein Anpassungssignal einen Schritt des Ausgebens eines Änderungssignals zum Ändern eines Informationsgehaltes in dem Bild und/oder des Änderns eines virtuellen Abstands zwischen einer ersten virtuellen Ebene und einer zweiten virtuellen Ebene des Bildes und/oder einer Oberfläche des Bildschirms auf.

Das Verfahren kann im Zusammenhang mit einer Anzeigeeinrichtung eines Fahrzeugs wie beispielsweise eines Personen- oder Lastkraftwagens durchgeführt werden, wobei der Bildschirm das Ausgabeelement der Anzeigeeinrichtung bilden kann. Handelt es sich bei der Anzeigeeinrichtung um eine Blickfeldanzeigeeinrichtung, kann der Bildschirm durch eine Windschutzscheibe des Fahrzeugs repräsentiert werden. Bei dem Bild kann es sich um ein zwei- oder dreidimensionales Abbild beispielsweise einer Umgebung des Fahrzeugs handeln. Das Bild kann durch eine optische Einrichtung, z. B. eine Fahrzeugkamera des Fahrzeugs, erzeugt werden. Das Bild kann neben einer Wiedergabe von real in der Umgebung des Fahrzeugs existierenden Objekten auch virtuelle Objekte enthalten. Unter dem Anpassen der Darstellung des Bildes kann eine softwaremäßige Modifizierung des Bildes dahin gehend verstanden werden, dass das Bild für eine Wahrnehmung durch die Augen einer das Bild betrachtenden Person verändert wird. Insbesondere kann durch das Anpassen der Darstellung eine Komplexität des Bildes in Bezug auf die Wahrnehmung erhöht oder verringert werden, um eine Aufmerksamkeitsleistung der das Bild betrachtenden Person entsprechend mehr oder weniger zu fordern. Je geringer die Komplexität des Bildes, umso weniger Aufmerksamkeitsleistung des Betrachters ist zur Verarbeitung des Bildes erforderlich. Unter dem Informationsgehalt kann ein Umfang einer Datenmenge für z. B. einen Abschnitt des Bildes verstanden werden, die optisch durch die Augen der Person wahrgenommen und im Gehirn ausgewertet bzw. verarbeitet wird. Beispielsweise kann durch eine Reduzierung des Umfangs der zu verarbeitenden Datenmenge die Komplexität des Bildes bzw. des Abschnitts des Bildes verringert werden. Das Ändern des virtuellen Abstands kann in Bezug auf eine Mehr- oder Vielzahl von virtuellen Ebenen eines als dreidimensionales Bild dargestellten Bildes erfolgen. Auch durch das Ändern des virtuellen Abstands kann die Komplexität des Bildes verändert werden, da sich die Änderung des virtuellen Abstands auf einen 3D-Effekt des Bildes auswirkt. Je geringer der virtuelle Abstand, umso geringer der 3D-Effekt und umso geringer die Komplexität, und je höher der virtuelle Abstand, umso größer der 3D-Effekt und umso höher die Komplexität.

Gemäß einer Ausführungsform des Verfahrens kann ansprechend auf das Änderungssignal eine Reduzierung des Informationsgehaltes in dem Bild und/oder eine Verringerung des virtuellen Abstands zwischen der ersten virtuellen Ebene und der zweiten virtuellen Ebene des Bildes und/oder der Oberfläche des Bildschirms erfolgen. So kann auf einfache und schnelle Weise die Komplexität der Darstellung herabgesetzt werden, um die Aufmerksamkeitsleistung des Betrachters weniger zu fordern. Damit kann eine ermüdende Wirkung der Darstellung auf eine das Bild betrachtende Person wirksam reduziert werden.

Beispielsweise kann die Reduzierung des Informationsgehaltes bewirkt werden, indem ein Farbwert und/oder Inhalt eines Bildelements der Darstellung mit einem Farbwert und/oder Inhalt eines zu dem Bildelement benachbarten weiteren Bildelements gleichgesetzt oder angeglichen wird. Das Bildelement der Darstellung kann auch als Pixel bezeichnet werden und eines einer Vielzahl von Flächenelementen des Bildschirms bilden, die in diesem zur Darstellung des Bildes eingesetzt werden. Der Farbwert kann einer der Grundfarben Rot, Grün und Blau zugeordnet sein, aus denen sich die Darstellung des Bildes zusammensetzt. Unter dem Inhalt kann beispielsweise eine in dem Bildelement enthaltene Codierung verstanden werden. Gemäß dieser Ausführungsform wird eine einfach zu erzeugende kontrollierte Qualitätsminderung der Darstellung vorteilhaft und situationsbezogen eingesetzt, um Müdigkeitserscheinungen bei der das Bild betrachtenden Person entgegenzuwirken und so ihr Aufmerksamkeitspotenzial für situationsbedingt wichtigere Ereignisse, wie beispielsweise den Straßenverkehr zu erhöhen, sollte es sich bei der Person um einen Fahrer eines Fahrzeugs handeln. Die durch die Reduzierung des Informationsgehaltes bewirkte Qualitätsminderung der Darstellung kann so realisiert werden, dass ein Inhalt bzw. eine Bedeutung des Bildes als Ganzes nicht beeinträchtigt wird.

Auch kann ein Farbwert und/oder Inhalt eines ersten Bildelements der Darstellung für einen ersten Blickwinkel eines ersten Auges einer die Darstellung betrachtenden Person mit einem Farbwert und/oder Inhalt eines zu dem ersten Bildelement benachbarten weiteren ersten Bildelements desselben Betrachtungswinkels gleichgesetzt werden. Entsprechend kann ein Farbwert und/oder Inhalt eines zweiten Bildelements der Darstellung für einen zweiten Blickwinkel eines zweiten Auges der die Darstellung betrachtenden Person mit einem Farbwert und/oder Inhalt eines zu dem zweiten Bildelement benachbarten weiteren zweiten Bildelements des zweiten Betrachtungswinkels gleichgesetzt werden. So kann auch bei einer 3D-Darstellung des Bildes die Komplexität auf einfache Weise verringert werden, ohne dass dies eine fehlerhafte Darstellung des 3D-Effektes zur Folge hätte.

Gemäß einer weiteren Ausführungsform kann ansprechend auf das Änderungssignal eine Vergrößerung des virtuellen Abstands zwischen der ersten virtuellen Ebene und der zweiten virtuellen Ebene des Bildes und/oder der Oberfläche des Bildschirms erfolgen. Insbesondere kann eine Zeitdauer für die Vergrößerung des virtuellen Abstands kürzer als eine Zeitdauer für die Verringerung des virtuellen Abstands sein. Mit einer derartigen auf einfache Weise generierten Aufmerksamkeitsanforderung an die den Bildschirm betrachtende Person kann eine schnell aktivierbare und effektive Warnfunktion - z. B. bei erfasster starker Müdigkeit der Person - implementiert werden.

Eine einfache Realisierung dieser Änderung des virtuellen Abstands z.B. in autostereoskopischen Anzeigen kann dadurch erfolgen, dass die Farbwerte und/oder Inhalte zweier benachbarter Bildelemente unterschiedlicher Blickwinkel gleichgesetzt werden.

Gemäß einer Ausführungsform des Verfahrens kann das Anpassungssignal einen Grad einer erfassten Müdigkeit einer den Bildschirm betrachtenden Person repräsentieren, beispielsweise in der Form eines Müdigkeitssignals. Das Müdigkeitssignal kann beispielsweise von einem im Fahrzeug installierten Müdigkeitssensor geliefert werden. Gemäß dieser Ausführungsform kann die Anpassung der Bilddarstellung unabhängig von der Person und entsprechend frühzeitig erfolgen. So kann vorteilhafterweise der Sicherheitsaspekt z. B. im Zusammenhang mit einem Einsatz des Bildschirms in einem Fahrzeug verbessert werden.

Alternativ oder zusätzlich kann das Anpassungssignal einen Grad einer erfassten Verschlechterung von Lichtverhältnissen in einer Umgebung einer den Bildschirm betrachtenden Person repräsentieren, beispielsweise in der Form eines Umgebungssignals. Das Umgebungssignal kann beispielsweise von einer Fahrzeugkamera eines das Verfahren einsetzenden Fahrzeugs bereitgestellt werden und einen Zustand von Lichtverhältnissen einer Fahrzeugumgebung repräsentieren. Mit dieser Ausführungsform des Verfahrens kann der Tatsache Rechnung getragen werden, dass schlechte Lichtverhältnisse in der Umgebung bzw. ein starker Kontrast zwischen einer dunklen Umgebung und einer hellen oder leuchtenden Darstellung des Bildes das Entstehen von Müdigkeitserscheinungen bei der betrachtenden Person begünstigen können. Auch diese Ausführungsform des Verfahrens kann sich positiv auf einen Sicherheitsaspekt auswirken, da wirksam einer Ermüdung einer den Bildschirm betrachtenden Person frühzeitig vorgebeugt werden kann.

Ferner kann das Anpassungssignal basierend auf einer Eingabe über eine HMI-Schnittstelle einer das Verfahren einsetzenden Vorrichtung ausgegeben werden. Die HMI-Schnittstelle kann z. B. eine Bedieneinrichtung mit Tasten repräsentieren, über die die Person nach eigenem Ermessen die Komplexität der Darstellung des Bildes einstellen kann. Mit dieser Ausführungsform kann das erfindungsgemäße Verfahren ohne Weiteres um eine den Komfort erhöhende Individualisierungskomponente erweitert werden.

Eine Vorrichtung zum Anpassen einer Darstellung eines Bildes auf einem Bildschirm weist eine Änderungseinrichtung auf, die ausgebildet ist, um ansprechend auf ein Anpassungssignal ein Änderungssignal zum Ändern eines Informationsgehaltes in dem Bild und/oder eines virtuellen Abstands zwischen einer ersten virtuellen Ebene und einer zweiten virtuellen Ebene des Bildes und/oder einer Oberfläche des Bildschirms auszugeben.

Die Vorrichtung kann ausgebildet sein, um die Schritte des erfindungsgemäßen Verfahrens in entsprechenden Einrichtungen durchzuführen bzw. umzusetzen. Auch durch diese Ausführungsvariante der Erfindung in Form einer Vorrichtung kann die der Erfindung zugrunde liegende Aufgabe schnell und effizient gelöst werden.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Die Vorrichtung kann beispielsweise in einem Fahrzeug zur Verringerung der Unfallgefahr eingesetzt werden und beispielsweise neben einer Verbindung mit einem Bildschirm einer Anzeigeeinrichtung des Fahrzeugs mit einem Müdigkeitssensor des Fahrzeugs gekoppelt sein. Die Vorrichtung kann Teil eines Steuergeräts zum Steuern einer Bildschirmanzeige sein oder mit einem derartigen Steuergerät gekoppelt sein.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programmprodukt auf einem Computer oder einer Vorrichtung ausgeführt wird.

Die Erfindung wird nachstehend anhand der beigefügten Zeichnungen beispielhaft näher erläutert. Es zeigen:
- Fig. 1: eine Prinzipdarstellung einer Vorrichtung zum Anpassen einer Darstellung eines Bildes auf einem Bildschirm, gemäß einem Ausführungsbeispiel der vorliegenden Erfindung;
- Fig. 2: eine Prinzipdarstellung der Vorrichtung aus Fig. 1 im Zusammenhang mit einem Müdigkeitssensor, gemäß einem Ausführungsbeispiel der vorliegenden Erfindung; und
- Fig. 3: ein Ablaufdiagramm eines Verfahrens zum Anpassen einer Darstellung eines Bildes auf einem Bildschirm, gemäß einem Ausführungsbeispiel der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

Die hier vorgestellte Idee beschäftigt sich mit der Problematik der Ermüdung des Betrachters einer Bildschirmanzeige. Im automobilen Umfeld kann dies z. B. der Fahrer eines Fahrzeugs sein. Mit anhaltender Dauer der Betrachtung der Anzeige steigt auch die Ermüdung aufgrund der nötigen Aufmerksamkeit, um die Details der Anzeigendarstellung zu erkennen.

Das anhand der nachfolgenden Figuren vorgestellte Konzept umfasst eine Erkennung einer Ermüdung des Betrachters eines digitalen Bildes sowie die softwaretechnische Umsetzung und Anpassung einer Komplexität bzw. eines 3D-Effekts des Bildes.

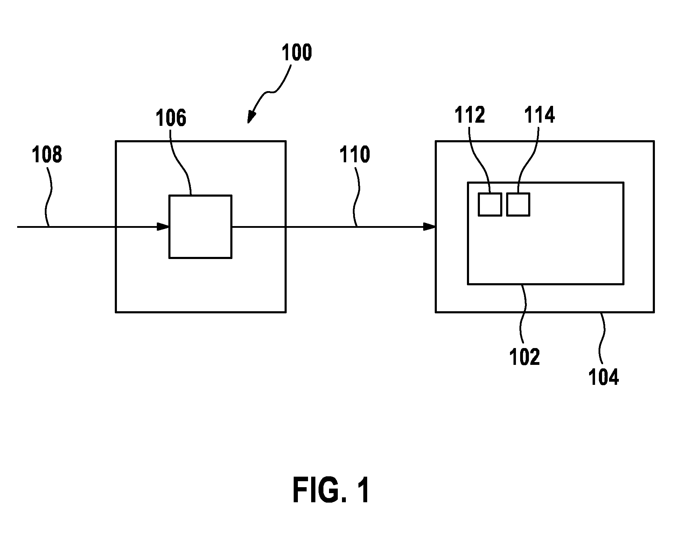

Fig. 1 zeigt anhand einer Prinzipdarstellung ein Ausführungsbeispiel einer Vorrichtung 100 zum Anpassen einer Darstellung eines Bildes 102 auf einem Bildschirm 104. Die Vorrichtung 100 weist eine Einrichtung 106 auf, die ausgebildet ist, um ansprechend auf ein Anpassungssignal 108 ein Änderungssignal 110 auszugeben. Bei dem Bild 102 handelt es sich hier um eine zweidimensionale Darstellung. Diese kann beispielsweise für einen Fahrer eines Fahrzeugs relevante Informationen enthalten. Das Bild 102 kann sich aus einer farbgetreuen Wiedergabe real existierender Objekte beispielsweise aus einer Fahrzeugumgebung und einer Einblendung virtueller Objekte zusammensetzen oder alternativ lediglich eine Wiedergabe real existierender Objekte oder virtuelle Elemente zeigen.

Ein Ziel des hierin vorgestellten Konzepts der Anpassung der Bilddarstellung ist es, eine Komplexität des Bildes 102 so herabzusetzen, dass die Betrachtung des Bildes 102 weniger ermüdend ist. Bei dem in Fig. 1 gezeigten Ausführungsbeispiel der Vorrichtung 100 wird dies über eine Änderung eines Informationsgehaltes in dem Bild 102 bewirkt. Das Änderungssignal 110 repräsentiert entsprechend eine Information zum Reduzieren eines Informationsgehalts des Bildes und wird über eine geeignete Schnittstelle von der Änderungseinrichtung 106 an eine Steuereinrichtung des Bildschirms 104 übermittelt, die geeignet ist, eine Anpassung der Darstellung des Bildes 102 auf dem Bildschirm entsprechend der Information des Änderungssignals 110 zu bewirken. Hier wird ansprechend auf das Änderungssignal 110 ein Farbwert eines Bildelements 112 der Darstellung mit einem Farbwert eines zu dem Bildelement 112 benachbarten weiteren Bildelements 114 gleichgesetzt. Die in der Darstellung in Fig. 1 gezeigten Bildelemente 112, 114 veranschaulichen exemplarisch die gemäß dieser Ausführungsform der Erfindung realisierte Darstellungsvereinfachung. Sie kann in dieser Form an einer Mehrzahl von Bildelementen in dem Bild 102 ausgeführt werden. Die Bildelemente 112, 114 können auch als Pixel bezeichnet werden. Das Bild 102 setzt sich in seiner Gesamtheit aus einer Vielzahl von Pixeln bzw. Bildelementen zusammen. Mit einer derartigen Übernahme des Farbwertes zwischen benachbarten Bildelementen wird die Darstellungsweise des Bildes 102 so verändert, dass seine Betrachtung für die Augen des Betrachters weniger anstrengend ist. Gemäß einem alternativen Ausführungsbeispiel wird anstelle des Farbwertes ein Inhalt des Bildelements 112 mit einem Inhalt des zu dem Bildelement 112 benachbarten weiteren Bildelements 114 gleichgesetzt. Bei dem Inhalt eines Bildelements kann es sich um eine spezifische Codierung des Bildelements handeln.

Die Änderungseinrichtung 106 ist ausgebildet, um das Änderungssignal 100 basierend auf dem Anpassungssignal 108 auszugeben, das sie über eine geeignete Schnittstelle empfängt. Das Anpassungssignal wird alternativ automatisch oder basierend auf einer Eingabe durch einen Anwender der Vorrichtung 100 an die Änderungseinrichtung 106 übermittelt.

Alternativ kann die Vorrichtung 100 so ausgeführt sein, dass eine Anzahl von in dem zweidimensionalen Bild 102 gezeigten Objekten und/oder deren Feinheit reduziert wird, um einer Ermüdung eines Betrachters des Bildes 102 vorzubeugen oder diese abzuschwächen.

Gemäß einem in den Figuren nicht gezeigten Ausführungsbeispiel handelt es sich bei dem Bild 102 um ein dreidimensionales Bild. Hier wird ansprechend auf das Änderungssignal 110 die oben beschriebene Darstellungsvereinfachung so ausgeführt, dass die Gleichsetzung des Farbwerts und/oder Inhalts zwischen benachbarten Bildelementen sowohl für den Blickwinkel des ersten Auges als auch für den Blickwinkel des zweiten Auges einer das Bild betrachtenden Person synchron durchgeführt wird, um das stereoskopische Sehen nicht zu beeinträchtigen.

Fig. 1 zeigt eine einfache zu implementierende Ausführung des hierin beschriebenen softwaretechnischen Ansatzes zur Bildanpassung, indem eine Auflösung der Darstellung beispielsweise in Abhängigkeit eines Grades der Müdigkeit m eines Betrachters verringert wir, und zwar indem bei benachbarten Pixeln 112, 114 der gleiche Inhalt angezeigt wird, bzw. - bei einer autostereoskopischen Ausführung - indem bei zwei für einen Blickwinkel benachbarten Pixeln 112, 114 der gleiche Inhalt angezeigt wird.

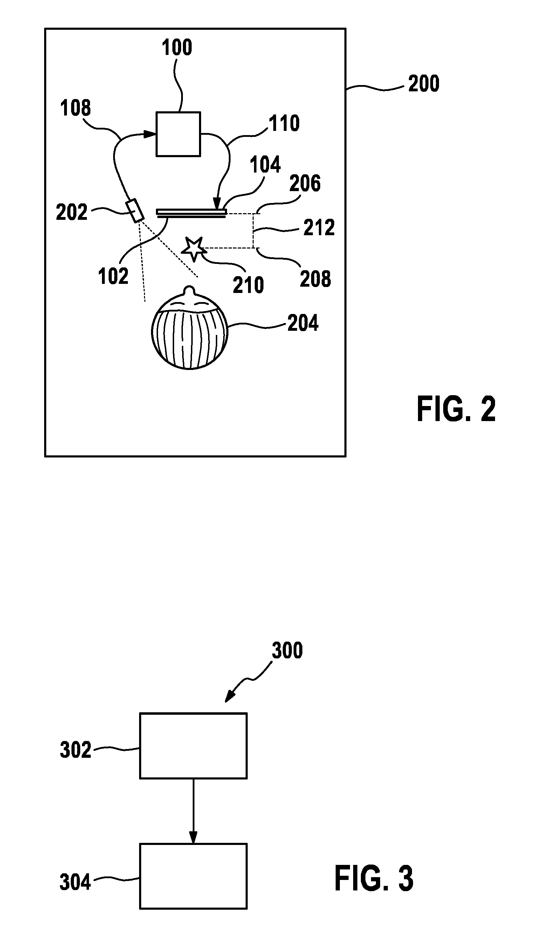

Fig. 2 zeigt in einer Draufsicht ein beispielhaftes Anwendungsszenario für die in Fig. 1 beschriebene Vorrichtung 100 im Zusammenhang mit einem Fahrzeug 200. Die Darstellung in Fig. 2 zeigt die Vorrichtung 100 im Zusammenspiel mit dem Bildschirm 104 einer Anzeigevorrichtung sowie einem Müdigkeitssensor 202 des Fahrzeugs 200. Eine Windschutzscheibe des Fahrzeugs 200 bildet hier in Form eines HUD den Bildschirm 104 zum Anzeigen des Bildes 102. Alternativ kann es sich bei dem Bildschirm 104 auch beispielsweise um den eines Navigationsgeräts oder einer Instrumentenanzeige des Fahrzeugs 200 handeln. Ein Fahrer des Fahrzeugs 200 hat als eine das Bild 102 betrachtende Person 204 den Blick auf den Bildschirm 104 gerichtet. Der Müdigkeitssensor ist so im Fahrzeug 200 angeordnet, dass er ein Verhalten und/oder beispielsweise Augenbewegungen des Fahrers 204 beobachten kann. Erfasst der Müdigkeitssensor 202 ein oder mehrere Müdigkeitssymptome der Person 204, so gibt er ein entsprechendes Signal aus. Entsprechend wird das Anpassungssignal 108 hier in Form eines Müdigkeitssignals an die Vorrichtung 100 übermittelt, die ansprechend darauf das geeignete Änderungssignal 110 an den Bildschirm 104 ausgibt.

Bei der in Fig. 2 gezeigten Darstellung handelt es sich bei dem auf dem Bildschirm dargestellten Bild 102 um ein dreidimensionales Bild bzw. ein Bild mit 3D-Effekt. Das 3D-Bild 102 wird mittels einer Oberfläche 206 des Bildschirms 104 als dem realen Anzeigegerät und einer ersten virtuellen Ebene bzw. Bildebene 208 dargestellt. In der ersten virtuellen Bildebene 208 befindet sich ein virtuelles Objekt 210 des 3D-Bildes 102. Alternativ kann eine zweite und noch weitere virtuelle Ebenen zur Darstellung des 3D-Bildes eingesetzt werden. Gemäß dem in Fig. 2 gezeigten Ausführungsbeispiel der Vorrichtung 100 wird ansprechend auf das Änderungssignal 110 die Komplexität des 3D-Bildes 102 vereinfacht, indem ein Abstand 212 zwischen der ersten virtuellen Ebene 208 und der Oberfläche 206 des Bildschirms 104 verringert wird. Ein optimiertes Maß f für den idealen Abstand 212 zur Komplexitätsverringerung des 3D-Bildes 102 bestimmt sich aus einem Wert m des Müdigkeitssignals 108 und einem Wert z des abzuändernden Maßes für den Abstand 202. Nach erfolgter Anpassung des Abstandes 212 wirkt das virtuelle Objekt 210 in den Augen des Betrachters 204 als näher an die Ebene der Bildschirmoberfläche 206 gerückt. Eine Betrachtung des 3D-Bildes 102 beansprucht die Augen nun weniger.

In diesem Zusammenhang soll erwähnt werden, dass die Gefahr einer Ermüdung bei der Betrachtung von 3D-Darstellungen im Allgemeinen besonders hoch ist. Dies entspringt z. B. der Tatsache, dass der Betrachter 204 auf mehrere Ebenen 206, 208 gleichzeitig fokussieren muss, wobei diese Ebenen 206, 208 jedoch zum Teil nur virtuell dargestellt werden. Die Anstrengung beim Sehen steigt, je "stärker" der 3D-Effekt ist, d. h. z. B., je stärker die virtuellen Ebenen 208 von der eigentlichen Anzeigenebene 206, z. B. des betrachteten Bildschirms 104, entfernt sind.

Hier kann mit der beschriebenen softwaretechnischen Vereinfachung der Komplexität des 3D-Bildes 102 durch die Abschwächung von dessen 3D-Effekt in Abhängigkeit von der erkannten Ermüdung des Fahrers 204 dessen Konzentrationsfähigkeit um ein Vielfaches verbessert werden. Der Sensor 202 erfasst - z. B. auf Grundlage eines Eye-Trackings - den Grad m der Müdigkeit des Fahrers 204. Zusammen mit dem bereits eingestellten virtuellen Abstand z 212 des Objektes 210 wird der optimierte virtuelle Abstand f(z,m) 212 ermittelt, der anschließend angezeigt wird. Der Abstand 212 der virtuellen Ebenen 206, 208 wird reduziert und damit das Bild 102 in einer Weise dargestellt, die für den Betrachter 204 weniger anstrengend ist.

Eine Umsetzungsmöglichkeit ist dabei die anhand der Fig. 2 erläuterte Koppelung der Vorrichtung 100 mit dem Müdigkeitssensor 202, der den Grad m der Müdigkeit des Betrachters 204 ermittelt. Ein solcher Sensor kommt z. B. in neueren Fahrzeugmodellen bereits schon zum Einsatz. Der Müdigkeitssensor 202 ist ausgebildet, um ein spezifisches Verhalten des Fahrers 204, wie z. B. ruckartige Lenkbewegungen, auszuwerten oder aber eine Überwachung seiner Augen durchzuführen. Letzteres ist insbesondere dann möglich, wenn ein den Müdigkeitssensor 202 einsetzendes System über ein Eye-Tracking oder eine ähnliche Betrachterbeobachtung verfügt.

Gemäß einem alternativen Ausführungsbeispiel der hierin beschriebenen Displayanwendung zur Vorbeugung einer Ermüdung eines Betrachters einer Displayanzeige wird in der Vorrichtung 100 eine betrachterunabhängige Messmethode eingesetzt, um ein erhöhtes Risiko der Müdigkeit des Betrachters 204 abzuschätzen, nämlich eine Auswertung einer Umgebungshelligkeit oder eine Erfassung eines Einschaltens von Beleuchtungseinrichtungen wie z. B. des Abblendlichts im Straßenverkehr. Bei entsprechenden Messwerten wird die hier vorgestellte softwaremäßige Verringerung der Komplexität der Darstellung durchgeführt. Das Anpassungssignal 108 wird dann in Form eines auf den relevanten Messwerten basierenden Umgebungssignals ausgegeben.

In einer speziellen Implementierung der erfindungsgemäßen Vorrichtung 100 wird die oben beschriebene Funktion der Änderung des virtuellen Abstandes 212 der Bildanzeigeebenen 206, 208 umgedreht, d. h., der virtuelle Abstand 212 wird vergrößert. Der Effekt ist hier eine schnelle Verstärkung des 3D-Effektes, um den Betrachter 204 beispielsweise in Bezug auf eine erfasste starke Müdigkeit zu warnen. Gemäß dieser Ausführungsform ist die Vorrichtung 100 ausgebildet, um nach einer allmählichen Reduzierung der virtuellen Ebenenabstände eine schnelle Zunahme des virtuellen Abstandes 212 zwischen den Ebenen 206, 208 zu bewirken und so für einen Aufmerksamkeitsimpuls bei dem Betrachter 204 sorgen, wie er z. B. bei starker Müdigkeit des Fahrers 204 oder einer anderen Gefahrenlage in Bezug auf die Fahrsicherheit notwendig sein kann. Gemäß dieser Ausführungsform wird das Anpassungssignal 108 in Form eines Warnsignals ausgegeben.

Fig. 3 zeigt ein Ablaufdiagramm eines Ausführungsbeispiels eines Verfahrens 300 zum Anpassen einer Darstellung eines Bildes auf einem Bildschirm. Das Verfahren 300 kann von der im Vorhergehenden beschriebenen Vorrichtung zum Anpassen einer Darstellung eines Bildes auf einem Bildschirm durchgeführt werden. In einem Schritt 302 wird ein Anpassungssignal zum Anpassen der Darstellung des Bildes eingelesen. In einem Schritt 304 wird ansprechend auf das Anpassungssignal ein Änderungssignal an den Bildschirm ausgegeben, wobei basierend auf dem Änderungssignal eine Darstellung des Bildes auf dem Bildschirm angepasst wird, indem ein Informationsgehalt des Bildes und/oder ein virtueller Abstand zwischen einer ersten virtuellen Ebene und einer zweiten virtuellen Ebene des Bildes und/oder einer Oberfläche des Bildschirms geändert wird.

Gemäß einer Ausführungsform des Verfahrens 300 wird in dem Schritt 302 das Anpassungssignal basierend auf einer Eingabe eines Anwenders des Verfahrens über eine HMI-Schnittstelle eingelesen. So kann der Benutzer die Komplexität bzw. den 3D-Effekt eines Bildes selbstständig anpassen bzw. einstellen, um das für ihn angenehmste Bild zu erzeugen.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können erfindungsgemäße Verfahrensschritte wiederholt sowie in einer anderen als in der beschriebenen Reihenfolge ausgeführt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (300) zum Anpassen einer Darstellung eines Bildes (102) auf einem Bildschirm (104), wobei das Verfahren (300) ansprechend auf ein Anpassungssignal (108) einen Schritt des Ausgebens (304) eines Änderungssignals (110) zum Ändern eines Informationsgehaltes in dem Bild (102) und/oder des Änderns eines virtuellen Abstands (212) zwischen einer ersten virtuellen Ebene (208) und einer zweiten virtuellen Ebene des Bildes (102) und/oder einer Oberfläche (206) des Bildschirms (104) aufweist.

2. Verfahren (300) gemäß Anspruch 1, **dadurch gekennzeichnet, dass** ansprechend auf das Änderungssignal (110) eine Reduzierung des Informationsgehaltes in dem Bild (102) und/oder eine Verringerung des virtuellen Abstands (212) zwischen der ersten virtuellen Ebene (208) und der zweiten virtuellen Ebene des Bildes (102) und/oder der Oberfläche (206) des Bildschirms (104) erfolgt.

3. Verfahren (300) gemäß Anspruch 2, **dadurch gekennzeichnet, dass** ansprechend auf das Änderungssignal (110) die Reduzierung des Informationsgehaltes bewirkt wird, indem ein Farbwert und/oder Inhalt eines Bildelements (112) der Darstellung mit einem Farbwert und/oder Inhalt eines zu dem Bildelement (112) benachbarten weiteren Bildelements (114) gleichgesetzt und/oder angeglichen wird.

4. Verfahren (300) gemäß Anspruch 2 oder 3, **dadurch gekennzeichnet, dass** ansprechend auf das Änderungssignal (110) ein Farbwert und/oder Inhalt eines ersten Bildelements (112) der Darstellung für einen ersten Blickwinkel eines ersten Auges einer die Darstellung betrachtenden Person (204) mit einem Farbwert und/oder Inhalt eines zu dem ersten Bildelement (112) benachbarten weiteren ersten Bildelements (114) gleichgesetzt wird und ein Farbwert und/oder Inhalt eines zweiten Bildelements der Darstellung für einen zweiten Blickwinkel eines zweiten Auges der die Darstellung betrachtenden Person (204) mit einem Farbwert und/oder Inhalt eines zu dem zweiten Bildelement benachbarten weiteren zweiten Bildelements gleichgesetzt wird.

5. Verfahren (300) gemäß einem der vorangegangenen Ansprüche, **dadurch gekennzeichnet, dass** ansprechend auf das Änderungssignal (110) eine Vergrößerung des virtuellen Abstands (212) zwischen der ersten virtuellen Ebene (208) und der zweiten virtuellen Ebene des Bildes (102) und/oder der Oberfläche (206) des Bildschirms (104) erfolgt, insbesondere wobei eine Zeitdauer für die Vergrößerung des virtuellen Abstands (212) kürzer als eine Zeitdauer für die Verringerung des virtuellen Abstands (212) ist.

6. Verfahren (300) gemäß einem der vorangegangenen Ansprüche, **dadurch gekennzeichnet, dass** das Anpassungssignal (108) einen Grad einer erfassten Müdigkeit einer den Bildschirm (104) betrachtenden Person (204) repräsentiert.

7. Verfahren (300) gemäß einem der vorangegangenen Ansprüche, **dadurch gekennzeichnet, dass** das Anpassungssignal (108) einen Grad einer erfassten Verschlechterung von Lichtverhältnissen in einer Umgebung einer den Bildschirm (104) betrachtenden Person (204) repräsentiert.

8. Verfahren (300) gemäß einem der vorangegangenen Ansprüche, **dadurch gekennzeichnet, dass** das Anpassungssignal (108) basierend auf einer Eingabe über eine HMI-Schnittstelle einer das Verfahren (300) einsetzenden Vorrichtung (100) ausgegeben wird.

9. Vorrichtung (100) zum Anpassen einer Darstellung eines Bildes (102) auf einem Bildschirm (104), wobei die Vorrichtung (100) eine Änderungseinrichtung (106) aufweist, die ausgebildet ist, um ansprechend auf ein Anpassungssignal (108) ein Änderungssignal (110) zum Ändern eines Informationsgehaltes in dem Bild (102) und/oder eines virtuellen Abstands (212) zwischen einer ersten virtuellen Ebene (208) und einer zweiten virtuellen Ebene des Bildes (102) und/oder einer Oberfläche (206) des Bildschirms (104) auszugeben.

10. Computer-Programmprodukt mit Programmcode zur Durchführung des Verfahrens (300) nach einem der Ansprüche 1 bis 8, wenn das Programmprodukt auf einer Vorrichtung (100) ausgeführt wird.
